Europäisches Patentamt

European Patent Office

Office européen des brevets

(11) Publication number: **0 201 941**
**A2**

## (12) EUROPEAN PATENT APPLICATION

(21) Application number: **86200191.4**

(22) Date of filing: **12.02.86**

(51) Int. Cl.⁴: **A47J 31/40**

(30) Priority: **13.03.85 IT 2107285 U**

(43) Date of publication of application:
**20.11.86 Bulletin 86/47**

(84) Designated Contracting States:
**AT BE CH DE FR GB IT LI LU NL SE**

(71) Applicant: **Rastrelli, Vinicio**
**Via A. Volta, 27/22**
**I-16128 Genova(IT)**

(72) Inventor: **Rastrelli, Vinicio**
**Via A. Volta, 27/22**
**I-16128 Genova(IT)**

(74) Representative: **Martegani, Franco et al**
**Ingg. GUZZI e RAVIZZA S.r.l. Via Boccaccio, 24**
**I-20123 Milano(IT)**

(54) Improved infuser unit for automatic machines adapted to prepare infusions, in particular coffee.

(57) An improved infuser unit for automatic machines adapted to prepare infusions, in particular coffee, comprises an infuser cylinder within which there is housed in a freely translatable manner a shuttle carrying at its opposed ends water diffuser filters that are alternately fed through respective conduits formed within said shuttle. Such conduits are in trun fed by an annular water manifold formed in said infuser cylinder, provision being made also for a counterfilter cooperating with each of said diffuser filters.

Fig. 2

EP 0 201 941 A2

# "IMPROVED INFUSER UNIT FOR AUTOMATIC MACHINES ADAPTED TO PREPARE INFUSIONS, IN PARTICULAR COFFEE"

Automatic machines adapted to prepare infusions, in particular coffee, are known in which an infuser unit comprises a cylinder which is stepwise movable to different working positions.

In a first position the infuser cylinder receives a dose of coffee powder, in a second position it is traversed by hot water for preparing and dispensing the infusion, and in a third position the coffee grounds are expelled and the filter washed.

An infuser cylinder of this type is for example described and illustrated in Italian patent 1.060.741, and the relevant technology may be better understood therefrom.

The overall object of the present invention is to embody an infuser unit of the kind in question, but much more straightforward and economical to construct and highly dependable as to operation.

To attain this object the present invention embodies an improved infuser unit for automatic machines adapted to prepare infusions, in particular coffee, comprising an infuser cylinder within which there is housed in a freely translatable manner a shuttle carrying at its opposed ends water diffuser filters that are alternatively fed through respective conduits formed within said shuttle, such conduits being in turn fed by an annular water manifold formed in the said infuser cylinder, provision also being made for a counterfilter cooperating with each of said diffuser filters.

Preferably, the said counterfilter is carried by a piston which is constantly thrust by spring pressure against the opposed end of the infuser cylinder, said piston also being provided with a hollow stem which places said infuser cylinder in communication with an infusion dispensing spout.

The structural and functional characteristics of the invention, and its advantages compared to the known art, will become more apparent from an examination of the following description referred to the appended schematic drawings which illustrate an infuser unit embodied according to the innovatory principles of the invention.

In the drawings:

Figure 1 is a partially sectioned elevational view of the infuser unit according to the invention, with the relative cylinder in the position for receiving a dose of coffee powder;

Figure 2 is a longitudinal section illustrating the infuser cylinder in Figure 1 in the position for preparing and dispensing the infusion;

Figure 3 is a partially sectioned elevational view showing an example of device adapted to control the stepwise rotation of the infuser cylinder; and

Figure 4 is a sectional view taken on the line IV-IV in Figure 3.

With reference to the drawings, the infuser unit embodied according to the invention is indicated overall by 10, and comprises a support 11 on which, through opposed pins 12, there is mounted an infuser cylinder 13 which can be controlled to rotate stepwise.

According to the invention, a shuttle 14 carrying at its opposed ends water diffuser 15, 16 freely translates within the cylinder 13.

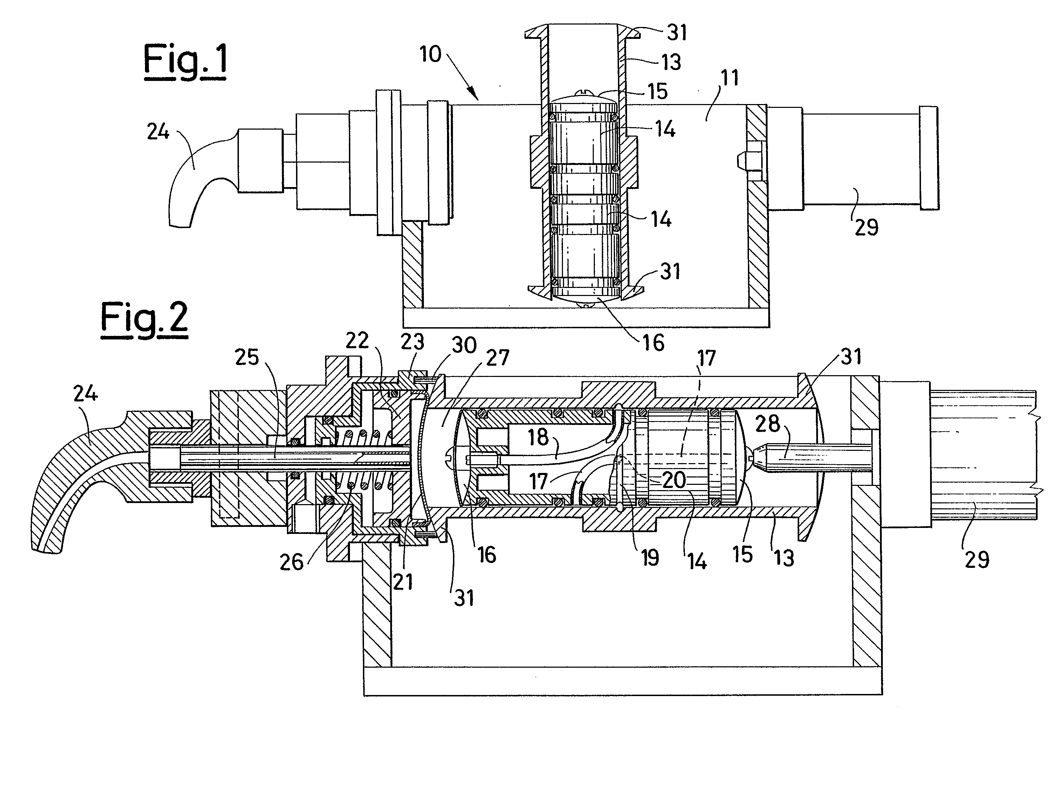

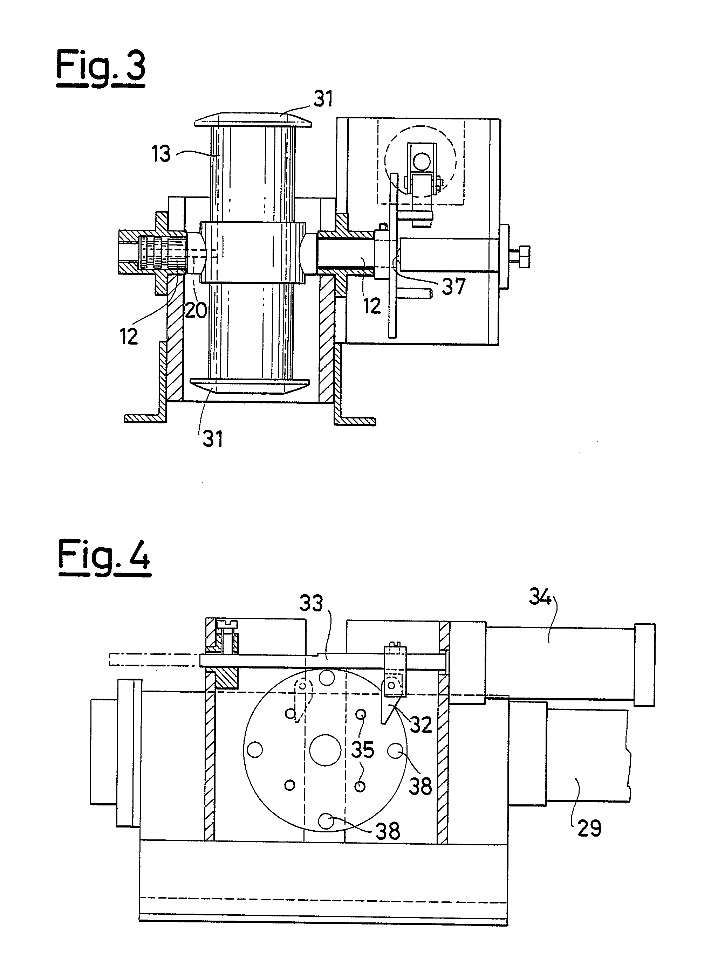

As Figures 2 and 3 clearly show, the water for preparing the infusion is fed to said filters 15, 16 through respective conduits 17, 18 disposed internally to the shuttle 14, which conduits, at each to-and-fro translation of the shuttle 14 are placed alternately in communication with an annular manifold 19 formed at the centre of the inner wall of the cylinder 13.

The manifold 19 is in turn fed through a conduit 20 formed axially through one of the pins 12 on which the infuser cylinder 13 rotates (Figure 3).

Also cooperating with the diffuser filters 15, 16 is a single counterfilter 21 carried by a piston 22 housed within a stationary cylinder 23, which is fixed to the support 11 immediately upstream of a spout 24 through which the infusion is dispensed. Communication between the infuser cylinder and the spout 24 is effected through a hollow stem 25 with which the piston 22 is provided, which piston is under constant pressure from a spring 26 so that the counterfilter 21 is thrust against the end of the infuser cylinder 13.

In this way the dose of coffee powder 27 will be sufficiently compressed between the diffuser filters 15, 16 and the counterfilter as a result of the action of an impeller 28 acting on the opposed non-operative end of the shuttle 14.

The impeller 28 can be actuated by a hydraulic cylinder 29.

Seal is assured during the infusion by an annular gasketing 30 acting on the spherical head 31 at the end of the cylinder 13.

The stepwise rotation of the infuser cylinder 13 can be controlled by various types of actuation.

As Figures 3 and 4 show, provision can for example be made for a harpoon device comprising a pawl 32 restrained to a stem 33 of an actuating cylinder 34.

When the stem 33 translates forwards, the pawl 32 acts on one of the teeth 35 carried by a disc solid with one of the pins 12. The infuser cylinder 13 is thus caused to rotate by one step (in this case by 90°).

As will be clear, the return run of the pawl is not operative.

An infuser unit is in this way embodied which is extremely straightforward and economical in construction and highly dependable in operation, in which the infuser cylinder comprises a shuttle carrying at its ends the water diffuser filters fed through internal conduits communicating with a water manifold supplied with water by a boiler and formed in the infuser cylinder itself.

The piston carrying the counterfilter is also of great simplicity and dependability, in that it is kept in contact with the spherical head at the end of the infuser cylinder by means of simple spring pressure.

## Claims

1) An improved infuser unit for automatic machines adapted to prepare infusions, in particular coffee, comprising an infuser cylinder within which there is housed in a freely translatable manner a shuttle carrying at its opposed ends water diffuser filters that are alternately fed through respective conduits formed within said shuttle, such conduits being in turn fed by an annular water manifold formed in said infuser cylinder, provision being made also for a counterfilter cooperating with each of said diffuser filters.

2) An infuser unit as described in claim 1, wherein said counterfilter is carried by a piston which is constantly thrust under spring pressure against the opposed end of the infuser cylinder, said piston also being provided with a hollow stem which places said infuser cylinder in communication with an infusion dispensing spout.

Fig.1

Fig.2

## Fig.3

## Fig.4